# EUROPEAN PATENT APPLICATION

(11) **EP 3 876 393 A1**
(43) Date of publication of application: **08.09.2021**
(21) Application number: 19879197.2
(22) Date of filing: 25.10.2019
(51) Int. Cl.: H02K 1/22, H02K 1/28, H02P 9/02

(54) **DEVICE CAPABLE OF CONTROLLING MAGNETIC ACTION, ELECTRIC GENERATOR USING SAME, AND PART FOR SAME**

(30) Priority: 31.10.2018 KR 20180132504
(71) Applicant: Shin, Deok Ho, Seoul 06671 (KR)
(72) Inventor: Shin, Deok Ho, Seoul 06671 (KR)
(74) Representative: Byrne, Declan
(86) International application number: PCT/KR2019/014112
(87) International publication number: WO 2020/091313

(57) **Abstract**

The purpose of the present invention is to provide an electric generator which allows the magnitude of mutual magnetic action between a rotor and an armature to be self-adjusted in the electric generator against a fluctuation in a motive power or a fluctuation in an electric load, such that the magnitude of an induced electromotive force is controlled to compensate, with voltage variation, for amounts of the fluctuation in the motive power and the fluctuation in the electric load and to induce electricity with a uniform frequency from the electric generator, while stabilizing the prime mover or load devices, and parts optimized for the same. To this end, the present invention has an iron-piece structure in which the rotor and the armature of the electric generator mutually correspond to each other in a concave-convex structure, and the present invention is configured to be able to control the magnitude of the induced electromotive force, as the armature moves in the axial direction in response to a change in the rotation speed, output voltage, or frequency of the electric generator and, thereby, variably controls a mutually corresponding length of the concave-convex structure.

## Description

### [Technical Field]

The present invention relates to a device which is capable of controlling magnetic action, and an electric generator including the same, and more particularly, to an electric generator which may control magnetic action between a rotor and an armature of the electric generator in response to a fluctuation in the motive power supplied to a rotor shaft and a fluctuation in the load of electricity induced from the electric generator, thus to compensate for such fluctuations with voltage variation, and induce constant electricity by frequency, and parts for the same.

### [Background Art]

An electric generator is a device configured to convert mechanical and thermal energy into electrical energy. In general, the electric generator includes a rotor shaft for receiving a rotational force from a prime mover; an electric generator case in which parts of the electric generator are installed to protect the same; a rotor installed about the rotor shaft and including permanent magnets or field windings for generating a magnetic field; an exciter for supplying electricity to the field windings; an armature (i.e., stator) magnetized by the magnetic field generated from the permanent magnets of the rotor and including windings for linking the same; bearings for rotatably supporting both end portions of the rotor shaft; a lubrication device for supplying lubricant to the bearings; a ventilation and cooling device for removing heat generated from the electric generator and the like.

In the electric generator, as the rotor shaft that receives mechanical rotational energy rotates together with the rotor in which unipolar, non-polar (slot portion) and other polarities are partitioned on an outer circumference thereof by interlocking with the rotation of the rotor shaft, alternating magnetic action occurs on the armature that surrounds the outer circumference of the rotor by an inner circumference thereof with a gap therebetween. Electromagnetic waves are generated in the windings buried in an armature magnetic iron core by the alternating magnetic flux formed in the armature magnetic iron core due to electromagnetic interaction. The waves are alternately induced in the windings, and frequency and voltage of the alternating current electricity are determined by an alternating cycle of the rotor.

A fluctuation in the motive power generating mechanical energy and a fluctuation in the electric load directly affect an operation of the electric generator. Operation speed and output of the electric generator primarily depend on the operation of the prime mover that provides the motive power to the electric generator. In addition, a fluctuation in the load using electricity generated from the electric generator also directly affects the operation of the electric generator.

According to the theory of electromagnetism, when an electric current flows through a rotating conductor, the Lorentz force naturally occurs, which acts in a direction opposite to the rotational direction. Accordingly, as the the rotor of the electric generator rapidly rotates in order to induce electricity with a high frequency and voltage, the Lorentz force that obstructs the rotation of the electric generator is increased in proportion thereto.

Thereby, the output of the electric generator is increased or decreased depending on a change in the motive power. On the other hand, the Lorentz force that obstructs the operation of the electric generator is proportionally increased or decreased depending on the fluctuation in the load using the electricity generated from the electric generator. That is, if a magnitude of the motive power supplied to the electric generator is changed, the Lorentz force that obstructs the rotation of the electric generator is also increased or decreased in proportion thereto. The increase or decrease in the Lorentz force and the magnitude of the power induced by the electric generator are relative to each other, and the magnitude of the motive power, the load and the Lorentz force are closely related to the change in the rotation speed of the rotor shaft.

Thereby, in order to induce more electricity from the electric generator, grater mechanical energy should be supplied from the prime mover to the electric generator to cancel the Lorentz force that obstructs the rotation of the rotor shaft.

Accordingly, when the rotation speed of the motive power supplied to the electric generator is changed or the magnitude of the load using the electricity generated from the electric generator is changed, the rotor frequency and the armature frequency of the electric generator are changed, such that unstable magnetic action occurs between the rotor and the armature, and thereby electricity with unstable voltage and frequency is induced from the electric generator. In particular, when using wind energy with a large change in a wind speed as the motive power, if the wind speed is weak, the permanent magnets attached to the rotor strongly attract the core of the stator, and the rotor does not rotate at all or rotates weakly due to the brake phenomenon. Thereby, when weak wind below a certain wind speed blows, that is, the motive power provided for power generation is decreased to a predetermined magnitude or less, power generation is completely stopped.

For this reason, in order to supply stable electricity to a power system or an electricity consumer, electricity with irregular frequency and unstable voltage should be treated to a current having the rated frequency and rated voltage through a frequency converter and a transformer. In particular, it is easy to control the voltage, but the frequency conversion process requires high equipment costs and is complex, as well as a large amount of energy is wasted during the rectification process.

In consideration of the above-described problems, Korean Patent Registration Publication No. 10-1136817 proposes a permanent magnet generator having a moving type rotor.

In the above prior art, the generator is configured in such a way that, as the rotor moves in an axial direction according to the rotational force of the rotor shaft, parallel planes of the permanent magnet of the rotor and the armature core facing the same vary. When the rotational force is reduced, the rotor is moved so that only a portion of each of the permanent magnet and the armature core face each other, thereby controlling so that the brake action due to the attractive force of the permanent magnet of the rotor can be minimized. Therefore, since the rotor can be rotated to generate electricity even with an external force equal to or less than a certain rotational force, power generation efficiency is improved.

However, the above prior art with the above-described advantages has various disadvantages in terms of the structure. When considering a moving distance of the rotor to control the magnetic action from the maximum to the minimum (a minimum condition for the magnetic action is a state in which the rotor and armature core are shifted as much as possible, and they only partially correspond to each other at the end), the length of the electric generator should be increased to almost several times or more, such that the size of the device is increased. In addition, it is unreasonable to configure the rotor that should be rotated with being fixed to the shaft so as to be able to slide in the axial direction and move the rotor by adopting a spline key structure to the shaft, and maintenance may be difficult. In particular, there is plenty of room for vibration and friction which will be generated due to weight bias. In addition, since a pneumatic cylinder is used as a means for moving the rotor, it is difficult to precisely move the rotating rotor to a correct position in a lateral direction.

As another problem, not only a centrifugal force acts on the rotating rotor, but also a mutual attraction with the armature acts thereon, such that the movement of the rotor in the lateral direction is not preferable. When supplying lubricant to the spline, the armature is contaminated by the supplied lubricant, and fires may occur. As foreign matters are trapped between the gaps, various problems such as ignition due to heat generation and a reduction in the efficiency of magnetic action may occur.

In addition, it is difficult to apply the conventional electric generator to a large-capacity electric generator, and moreover, it is technically difficult to move the rotor with being rotated at a high speed. Further, it is more difficult to apply the conventional electric generator to a high-speed rotor type electric generator, because a service life of the device is significantly reduced due to the induced noise and vibration.

### [Prior Art Document]

### [Patent Document]

(Patent Document 1) Korean Patent Registration Publication No. 10-1136817

### [Summary of Invention]

### [Problems to be Solved by Invention]

Accordingly, in consideration of the above-mentioned circumstances, it is an object of the present invention to provide an electric generator which allows the magnitude of mutual magnetic action between a rotor and an armature to be self-adjusted in the electric generator against a fluctuation in a motive power or a fluctuation in an electric load, such that the magnitude of an induced electromotive force is controlled to compensate, with voltage variation, for amounts of the fluctuation in the motive power and the fluctuation in the electric load and to induce electricity with a uniform frequency from the electric generator, while stabilizing the prime mover or load devices, and parts optimized for the same.

Accordingly, the electric generator of the present invention not only performs functions such as an efficient governor and a productive braking device for controlling an operation of the prime mover, but also has utility capable of appropriately taking measures against outlet reactance due to an increase or decrease in the electric load.

Another object of the present invention is to provide an electric generator which has a compact size, high energy conversion, energy saving and efficiency, is easy to manage, and contributes to stably maintaining a power supply and demand system, and parts optimized for the same.

### [Means for Solving Problems]

To achieve the above objects, according to an invention of claim 1, there is provided a magnetic iron piece used in a rotor of an electric generator, the magnetic iron piece for a rotor including: a body having a U-shaped cross section and extending in a longitudinal direction, wherein both side walls of the body facing each other have protrusions and recesses of a concave-convex structure formed at upper ends thereof in a square shape, and the protrusions of the concave-convex structure form rotor magnetic poles, and the recesses form rotor non-magnetic sections, such that the rotor magnetic poles and the rotor non-magnetic sections are alternately and repeatedly provided.

According to an invention of claim 2, first permanent magnets of a first permanent magnet set may be inserted into first slots concavely formed inside the U-shaped of the magnetic iron piece, the rotor magnetic poles and the rotor non-magnetic sections may accommodate the first permanent magnets installed therein with a size corresponding to heights thereof, and the first permanent magnets may be arranged so that their N and S poles are expressed by contacting each of inner wall surfaces on both sides of the magnetic iron piece, and all polarities of the N and S poles face the same direction.

According to an invention of claim 3, the upper end of the rotor magnetic pole, which is the protrusion, may include magnetic pole concentration parts (head parts) having jaws protruding beyond a wall thickness of the magnetic iron piece, and the first permanent magnets disposed in the rotor magnetic pole may be installed to be caught and supported by the jaws of the magnetic pole concentration parts.

According to an invention of claim 4, there is provided a rotor mounted on a rotor shaft of an electric generator, the rotor for an electric generator including: a rotor frame fixed to the rotor shaft so as to rotate together with the rotor shaft; a plurality of first grooves formed at a predetermined interval over an entire circumference of the rotor frame and extending in an axial direction; and a rotor magnetic iron piece according to claim 2 in which a portion of an each lower end of a U-shaped body is inserted and mounted in the first grooves, wherein second slots are formed in the gap between the rotor magnetic iron pieces, and second permanent magnets of a second permanent magnet set are inserted in the second slots in the same size and manner as the first permanent magnet set, and the second permanent magnets are arranged so as to have the same polarity as that of the first permanent magnets with a wall surface of the rotor magnetic iron piece interposed therebetween.

According to an invention of claim 5, the rotor frame may be formed of an assembly of a plurality of divided unit bodies, and protective covers may be fastened to both sides of the assembly by bolts.

According to an invention of claim 6, the plurality of divided unit bodies may be coupled to each contact surface thereof through concave and convex coupling parts having a circular or polygonal shape corresponding to each other in a male and female coupling manner.

According to an invention of claim 7, there is provided a magnetic iron piece used for an armature of an electric generator, the magnetic iron piece for an armature including: wherein both side walls of the body facing each other have protrusions and recesses of a concave-convex structure formed at upper ends thereof in a square shape, and the protrusions of the concave-convex structure form armature magnetic poles, and the recesses form armature non-magnetic sections, such that the armature magnetic poles and the armature non-magnetic sections are alternately and repeatedly provided, and after each bobbin is fitted to both side walls forming the U-shaped cross section, coils are wound around the bobbin to form armature windings.

According to an invention of claim 8, there is provided an armature installed so as to surround an outer circumference of a rotor mounted on a rotor shaft of an electric generator with a gap therebetween, the armature for an electric generator including: an armature frame manufactured in a non-magnetic hollow cylindrical shape and installed so as to surround the outer circumference of the rotor; a plurality of second grooves formed in an inner circumference of the armature frame at a predetermined interval over an entire circumference thereof and extending in the axial direction; and an armature magnetic iron piece according to claim 7 in which a portion of an each lower end of a U-shaped body is inserted and mounted in the second grooves.

According to an invention of claim 9, the armature frame may be formed of a single cylindrical body or an assembly of a plurality of divided ring-shaped bodies, LM guide rails may be installed in a plurality of portions on an outer circumference of the armature frame to have a predetermined phase angle in an axial direction, the LM guide rails may be configured to guide a linear movement in the axial direction along the guide of LM guide bearings provided on an inner surface of an electric generator case, and prevent rotation of the armature frame in a circumferential direction, and the LM guide rails may be used as a fastening means of the plurality of divided ring-shaped bodies.

According to an invention of claim 10, a space between the armature windings of the armature magnetic iron piece may be insulated.

According to an invention of claim 11, side frame members may be fastened to both opened sides of the cylindrical armature frame by bolts, and sleeves for rotatably supporting the rotor shaft may be provided at centers of the side frame members, and the sleeves may be mounted to slide along the rotor shaft within a predetermined distance range.

According to an invention of claim 12, there is provided an electric generator including: a rotor shaft connected to the rotor shaft of a power source by a clutch coupling; a rotor for an electric generator according to any one of claims 4 to 6, which is mounted on the rotor shaft to be rotatable together therewith; and an armature for an electric generator according to any one of claims 8 to 10 which is installed concentrically so as to surround an outer circumference of the rotor of an electric generator with a predetermined gap therebetween, is installed to allow movement within a predetermined interval range in an axial direction of the rotor, and has protrusions and recesses of a concave-convex structure having the same length as the protrusions and recesses of a concave-convex structure of the rotor corresponding thereto; an electric generator case which surrounds an outer circumference of the armature for an electric generator to protect the same; a linear motor configured to move the rotor through a mechanism capable of being advanced or retracted in the axial direction; a speed sensor configured to detect a rotation speed of the rotor shaft or a power meter configured to measure output voltage and frequency of the electric generator; and a controller configured to control and drive the linear motor based on information detected from the speed sensor or the power meter, wherein the controller controls the linear motor so that the armature is moved to a first position in a direction in which a corresponding length between an armature magnetic pole tip and a rotor magnetic pole tip is decreased at the beginning of driving the electric generator or when a driving speed of a prime mover is decreased, and conversely, controls the linear motor so that the armature is moved to a third position in a direction in which the corresponding length between the armature magnetic pole tip and the rotor magnetic pole tip is increased when the driving speed of the prime mover is increased.

According to an invention of claim 13, side frame members may be fastened to both opened sides of the cylindrical armature frame of the armature by bolts, and sleeves (bearing housing) for rotatably supporting the rotor shaft may be provided at centers of the side frame members, and the sleeves may be mounted to slide along the rotor shaft within a predetermined distance range.

According to an invention of claim 14, a movement distance of the armature in the axial direction may correspond to a width of a protrusion or a width of a recess of the armature magnetic iron piece.

According to an invention of claim 15, the controller may control the movement distance of the armature in the axial direction based on rotation speed information detected by the speed sensor or output voltage and frequency information of the electric generator detected by the power meter.

According to an invention of claim 16, the upper end of the rotor magnetic pole, which is the protrusion of the rotor magnetic iron piece, may include magnetic pole concentration parts (head parts) having jaws protruding beyond a wall thickness of the magnetic iron piece, and first permanent magnets of a first permanent magnet set and second permanent magnets of a second permanent magnet set, which are respectively disposed in the first slots and the second slots, may be installed to be caught and supported by the jaws of the magnetic pole concentration parts with being in contact with the rotor magnetic pole.

According to an invention of claim 17, in the armature and the rotor, the recess forming the non-magnetic section may have a length formed longer than the length of the protrusion forming the magnetic pole.

According to an invention of claim 18, the power source driving the electric generator may be any one of wind energy, hydraulic energy, thermal energy, engine driving power, and steam energy.

According to an invention of claim 19, the first permanent magnets of the first permanent magnet set buried in the first slots of the rotor magnetic iron piece may be installed vertically in a protrusion section and horizontally in a recess section, may be formed to match the protrusion and the recess of the square concave-convex structure formed on the upper portion of the magnetic iron core forming wall members on both sides, and may be fixed in close contact by a metal adhesive so that the same poles face the magnetic iron core.

According to an invention of claim 20, a center guide provided in the bearing housing of an end shield may be formed in a polygonal shape, and polygonal sleeves or linear bearings may be installed at centers of the side frames installed at both ends of the armature, thereby supporting the armature so as to be linearly reciprocated.

According to an invention of claim 21, the groove of the armature frame on which the LM guide rails may be mounted is configured to form an exhaust passage in the axial direction.

According to an invention of claim 22, exhaust passages extending in the axial direction may be formed on an outer surface of the armature frame between the plurality of LM guide rails.

### [Advantageous Effects]

Since the electric generator of the present invention employs a device for controlling the magnetic action, a fluctuation in the output of the prime mover and a fluctuation in the electric load are compensated by an increase or decrease in voltage through the adjustment of the magnetic action, and electricity with a prescribed frequency may be induced. Accordingly, it is possible to induce electricity with the prescribed frequency from an induction electric generator without an excitation system, and the electric generator may perform the same role as a braking device for controlling the prime mover and a governor for efficiently managing the operation of the prime mover, as well as it is possible to play a role in effectively coping with the fluctuation in the electric load. Accordingly, there is provided an electric generator having high energy conversion efficiency, high energy efficiency of a prime mover and an electric system, and is capable of saving energy. Specifically, the following effects are expected in the electric generator of the present invention.
⊚ Since the rotor and the armature have concave-convex structures corresponding to each other, by moving the armature to a minimum within a small range of 2 to 3 cm and only controlling the corresponding length, the intensity of the magnetic flux applied to the armature may be widely controlled from the minimum to the maximum. Thereby, the electric generator employing the device for controlling the magnetic action of the present invention may control the capacity variation of the motive power and the variation in the electric load from the minimum to the maximum, such that versatility and economy are high, and particularly, the electric generator may be formed in a compact size.
⊚ When simply resetting the frequency on the control panel, drives of the prime mover and electric generator are controlled according the reset frequency, such that it is possible to stably induce electricity with a frequency suitable for use by electricity consumers.
⊚ Due to the concave-convex structure of the magnetic iron core, natural air circulation passages are provided between the rotor and the armature, thereby providing excellent cooling effect. Therefore, it is possible to prevent a decrease in conversion efficiency due to heat. In particular, when the magnetic action between the rotor and the armature is maximized, an attractive force generated by the rotor and armature is maximized, and the heat generation is also maximized. However, since a large annular gap is formed in a portion where the recess of the rotor and the recess of the armature correspond to each other, air circulation passages are secured, and thereby providing excellent cooling effect.
⊚ During the initial operation or low-speed operation of the prime mover, the electric generator controls the magnetic action range so as to reduce the strong attraction generated between the armature and the rotor, thereby minimizing a counter electromotive force. Thus, the prime mover may quickly enter a normal operation state. On the other hand, when the prime mover enters an excessive driving state, by controlling the magnetic action range to increase the induced electromotive force, a counter electromotive force proportional thereto is transmitted to the prime mover, such that an overspeed operation of the prime mover may be settled. Accordingly, it is possible to omit a separate braking device or a governor for controlling the overspeed operation of the prime mover, thereby solving unproductive problems such as a reduction in manufacturing costs of the electric generator and waste of energy.
⊚ When the prime mover enters a stop operation state, in order to prevent electricity with a poor quality frequency from being induced due to the low-speed mechanical rotational energy, by controlling the load so that the rotation speed of the rotor shaft is constantly maintained, it is possible to reduce a power source consumed for the operation of the prime mover.
⊚ When the inventive generator is installed in all power generation facilities such as existing thermal power plants, nuclear power plants, small hydropower generation facilities, wind power generators, solar power generation facilities, as well as transmission/transformation facilities, and energy storage and regeneration facilities, energy productivity and conversion efficiency may be increased, and energy loss may be greatly reduced.
⊚ Even if the rotation speed of the rotor shaft minutely fluctuates, the magnetic action is precisely adjusted immediately, such that the rotation speed of the rotor shaft hardly fluctuates. As a result, a voltage fluctuation occurs due to an increase or decrease in reactance, but electricity with a prescribed frequency may be continuously and stably generated and maintained.
⊚ Since a moving section of the armature is very short, by adopting a high-deceleration gear to a small linear servomotor, movement of the armature may be quickly and smoothly performed.
⊚ Complex, low energy efficiency, high-costs, and difficult-to-maintain rectification facilities installed to control the frequency and voltage of electricity in a transmission/transformation substation may be replaced with the electric generator including a device for controlling the magnetic action of the present invention. Therefore, high energy efficiency and safety may be secured.
⊚ The inventive generator may generate variable speed mechanical rotational energy suitable for the output load by using an electronic circuit. Therefore, mechanical transmissions used in transportation equipment such as an automobile and a ship and industrial equipment may be replaced with the electric motor of the present invention, which is simple and highly efficient. By adopting the device for controlling the magnetic action of the present invention to other air conditioners, refrigerators, electric hot-air blowers, electric heaters, etc. as an electric motor, high energy efficiency and energy saving effects may be obtained.

### [Brief Description of Drawings]

FIG. 1 is a perspective view illustrating an electric generator according to the present invention.
FIG. 2 is a front cross-sectional view illustrating the electric generator according to the present invention.
FIG. 3 is a front perspective sectional view illustrating the electric generator according to the present invention.
FIG. 4 is a cross-sectional view taken on line A-A of the electric generator according to the present invention.
FIG. 5 is an exploded perspective view of some parts of a rotor assembly for the electric generator according to the present invention.
FIG. 6 is a partially cut-away perspective view illustrating the rotor assembly for the electric generator according to the present invention.
FIG. 7(a) is a perspective view illustrating a unit divided body of a rotor frame according to the present invention, and FIG. 7(b) is a perspective view illustrating the rotor frame formed by assembling the divided unit bodies according to the present invention.
FIG. 8 is a view illustrating a U-shaped armature magnetic iron piece having a rectangular concave-convex structure according to the present invention.
FIG. 9 is cross-sectional views illustrating the concept of burying permanent magnets in a rotor magnetic iron piece in detail, wherein (a) is a cross-sectional view illustrating a rotor magnetic pole tip portion, and (b) is a cross-sectional view illustrating a rotor non-magnetic portion.
FIG. 10 is a side cross-sectional view illustrating the non-magnetic end portion of the rotor according to the present invention.
FIG. 11 is a perspective sectional view illustrating a state in which the rotor assembly, which has been assembled and manufactured according to the present invention, is installed on a rotor shaft and accommodated in an electric generator case.
FIG. 12 is a perspective view illustrating an external shape of an armature according to the present invention.
FIG. 13 is a front view illustrating the external shape of the armature according to the present invention.
FIG. 14 is a perspective view illustrating an armature frame forming the armature according to the present invention.
FIG. 15 is a side view illustrating the armature frame forming the armature according to the present invention.
FIG. 16 is a front perspective sectional view of the armature according to the present invention.
FIG. 17 is a perspective view of the armature magnetic iron piece of the present invention.
FIG. 18 is a perspective view illustrating the armature magnetic iron piece completed by inserting a bobbin in the armature magnetic iron piece of the present invention and winding a coil around an outer circumference of the bobbin.
FIG. 19(a) and (b) are perspective views illustrating a process of installing the armature magnetic iron piece on an inner surface of the armature frame of the present invention.
FIG. 20 is a perspective sectional view of the armature illustrating a state in which the armature magnetic iron piece is installed on the inner surface of the armature frame according to the present invention, which shows an internal structure after removing a side frame on one side.
FIG. 21 is a block diagram illustrating a power generation system and a control system of the present invention.
FIG. 22(a) (b) (c) are views describing operation processes of the electric generator of the present invention, wherein (a) is a cross-sectional view illustrating a state in which the armature is in a first position (minimum load position), and (b) is a cross-sectional view illustrating a state in which the armature is in a second position (design load position), and (c) is a cross-sectional view illustrating a state in which the armature is in a third position (maximum load position).
FIG. 23 is cross-sectional views illustrating the concept of a correspondence relationship between the rotor magnetic pole tip and the armature magnetic pole tip depending on operation states of the electric generator, which show the correspondence relationship between a rotor magnetic pole 25 and an armature magnetic pole 43a at the time of (a) is the lowest load (no load) operation, (b) is the center load operation, and (c) is the maximum load operation, respectively.

### [Mode for Carrying out Invention]

Hereinafter, configurations of the present invention will be described with reference to the accompanying drawings.

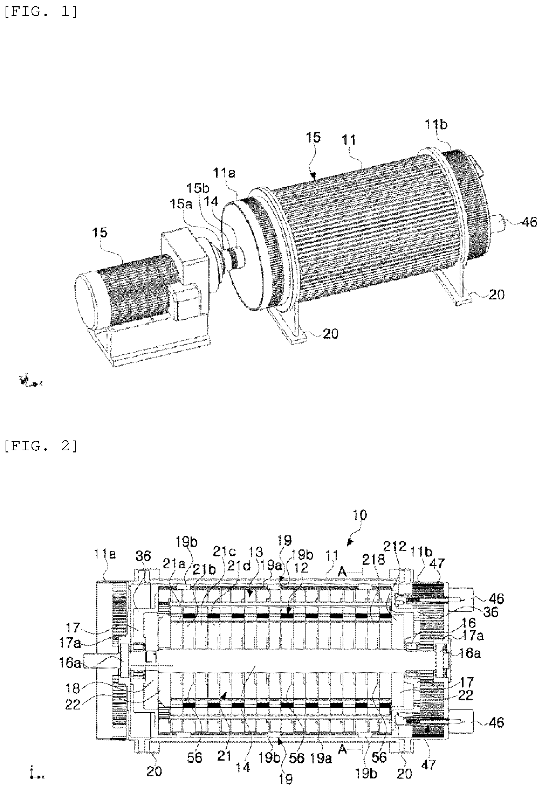

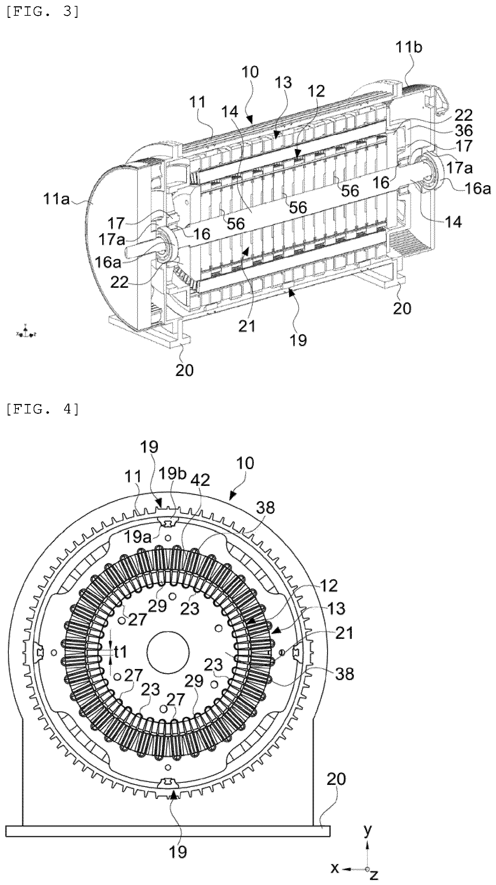

FIG. 1 is a perspective view illustrating an electric generator according to the present invention, FIG. 2 is a front cross-sectional view illustrating the electric generator according to the present invention, FIG. 3 is a front perspective sectional view illustrating the electric generator according to the present invention, and FIG. 4 is a cross-sectional view taken on line A-A of the electric generator according to the present invention.

An electric generator 10 of the present invention has a hollow cylindrical electric generator case 11 in which parts are mounted to protect the same. The electric generator case 11 includes corrugations formed on an outer side for cooling, and covers 11a and 11b which cover both sides thereof to form a part of the case 11 so as to protect the internal parts, and these covers are fastened to both sides of the case body by using a fastening means such as bolts.

In addition, a rotor 12 and an armature 13 are installed in the case 11. The rotor 12 includes a rotor shaft 14 at a center thereof. Herein, the rotor 12 is coupled to the rotor shaft 14 by a key, and is configured to rotate together with the rotor shaft 14. One end of the rotor shaft 14 extending outward through the cover 11a is connected to a shaft 15a of a prime mover 15, which is a power source, via a clutch coupling 15b. Therefore, the electric generator is configured to receive a rotational driving force of the prime mover 15 through the shaft 15a and the rotor shaft 14, and convert mechanical energy into electrical energy.

The rotor shaft 14 is rotatably supported by bearings 16 and 16a provided in bearing housings 17 and 17a, and the covers 11a and 11b for protecting the bearing housings 17a are fixed to the both opened sides of the electric generator case 11 with bolts. The armature 13 is installed on an inner circumference of the electric generator case 11 so as to surround an outer circumference of the rotor 12. The electric generator case 11 is formed in a size having a predetermined clearance 18 (movement allowable space L1 of the armature) so that the armature 13 installed therein can linearly reciprocate within a predetermined distance L1 in an axial direction.

In addition, linear motion bearings for guiding an axial movement of the armature 13, that is, linear motion (LM) guide mechanisms 19: 19a and 19b, are formed on the inner circumference of the electric generator case 11 and the outer circumference of the armature 13 in multiple rows in a direction parallel to the rotor shaft 14. Therefore, the LM guide mechanism 19 helps the armature 13 to smoothly reciprocate and linearly move in the axial direction within the predetermined clearance 18 (L1) inside the electric generator case 11. Accordingly, the armature 13 is configured in such a way that rotation in a circumferential direction is prevented, and movement in the axial direction within the predetermined clearance 18 (L1) is allowed, thus to allow a relative position with the rotor 12 to be changed.

Although not shown in the drawings to avoid complexity, an oil supply device is provided on one side of each of the covers 11a and 11b for lubrication and cooling of the bearings 16. The electric generator case 11 has exhaust ports formed on one side thereof for discharging the heated air to an outside to cool the internal parts when an internal temperature is increased. Support members 20 are installed at lower end portions of the electric generator case 11, and the support members 20 are preferably formed as levelers so as to prevent vibration and adjust a level, if possible. In addition, optionally, a flywheel for imparting an inertial force to the rotor 12 and a fan for cooling heat dissipated from the electric generator in contact with the flywheel may be mounted between the outside of the electric generator case 11 and the clutch coupling 15b.

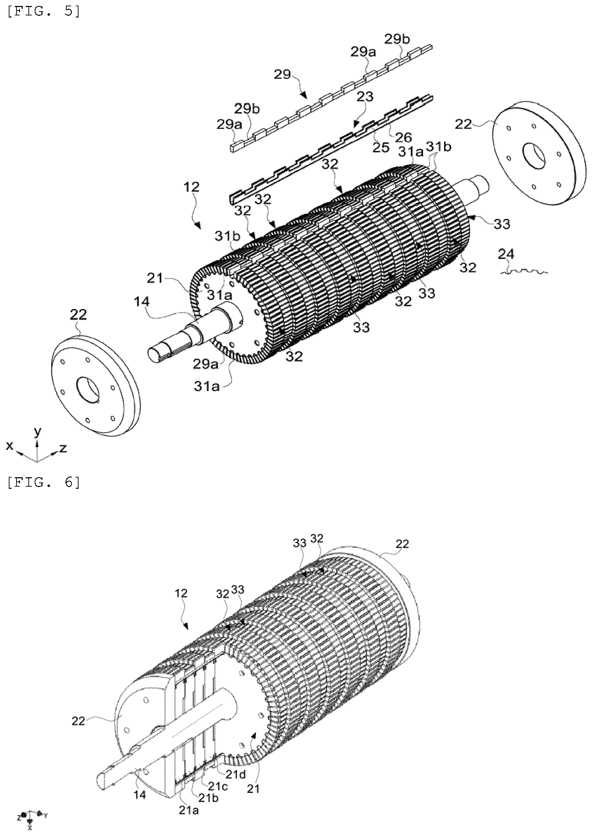

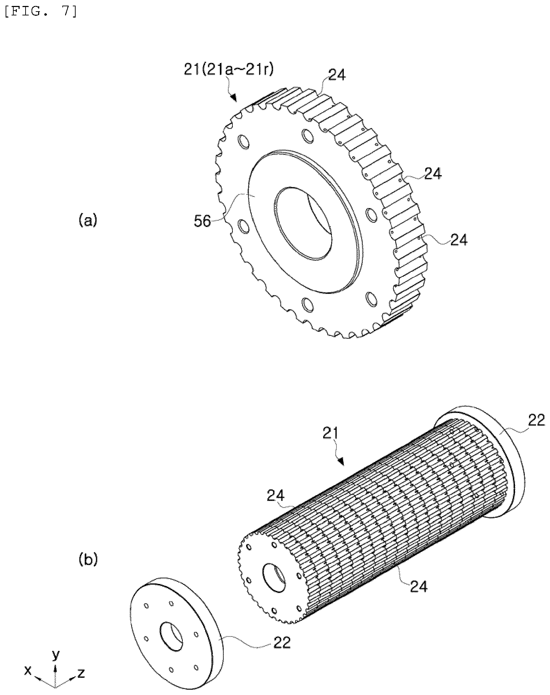

FIGS. 5 to 7 are views illustrating a rotor structure and a rotor frame of the present invention. The rotor 12 includes a rotor frame 21 fixedly mounted to the rotor shaft 14. The rotor frame 21 is made of a non-magnetic material and may be formed as a single body, but as shown in FIG. 7(a), a plurality of divided unit bodies 21a, 21b, 21c ... and 21r (a representative reference numeral 21 referring to an entire structure will be used) are formed in a division manner, and then mounted on the rotor shaft 14 to form a assembled rotor frame. In addition, protective covers 22 are attached to both sides of the rotor frame 21 and fixed thereto using bolts. The rotor frame 21 is configured to be firmly fixed to the rotor shaft 14, so as to be rotated together as a whole without causing slip in a rotational direction. To this end, the unit division bodies 21a, 21b, 21c ... and 21r of the rotor frame 21 are respectively coupled to the rotor shaft 14 by keys, or are provided with concave and convex coupling parts 56 of male and female shape corresponding to contact surfaces of each other to ensure accuracy of positioning. As shown in FIGS. 6 and 7, the concave and convex coupling parts 56 may also be formed in a combination type of circular protrusions and circular grooves. However, it is preferable that concave and convex parts are combined through a polygonal concave-convex combination to prevent relative slip, and then the protective covers 22 are mounted on both end portions thereof and fastened thereto with bolts, such that the entire assembly is integrally fixed on the rotor shaft to be rotated together without slip.

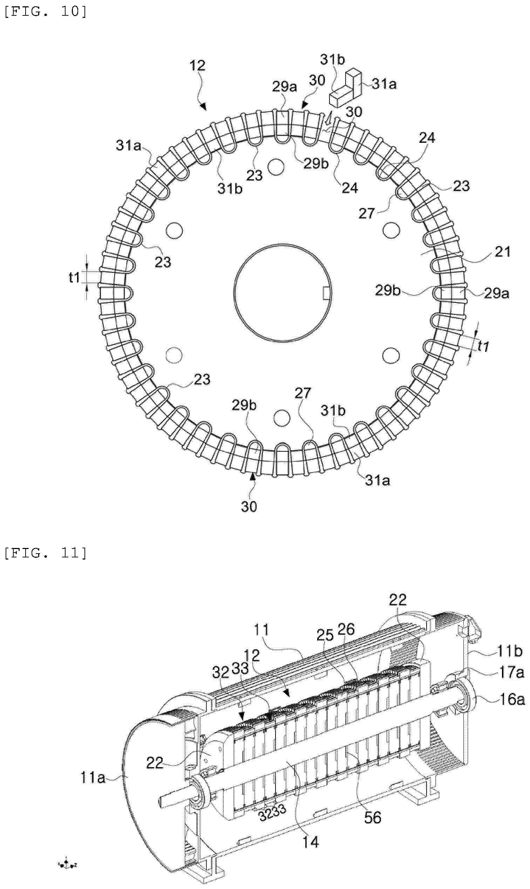

FIG. 10 is a side cross-sectional view illustrating a shape of the rotor. A plurality of first grooves 24 having a shape of approximately semicircular grooves are concavely formed in an outer circumference of the rotor frame 21 forming the rotor 12 over the entire circumference thereof at a predetermined interval t1 in a direction parallel to the rotor shaft in order to install rotor magnetic iron pieces 23. A portion of the lower end of a U-shaped body of the magnetic iron piece 23 is accommodated in the first groove 24 and fixed to the rotor frame 21 by bolts (not shown). Upper end portions of the rotor magnetic iron pieces 23 protrude from surfaces of the first grooves 24 in a radial direction, such that the predetermined interval t1 is maintained between the magnetic iron pieces 23 adjacent to each other.

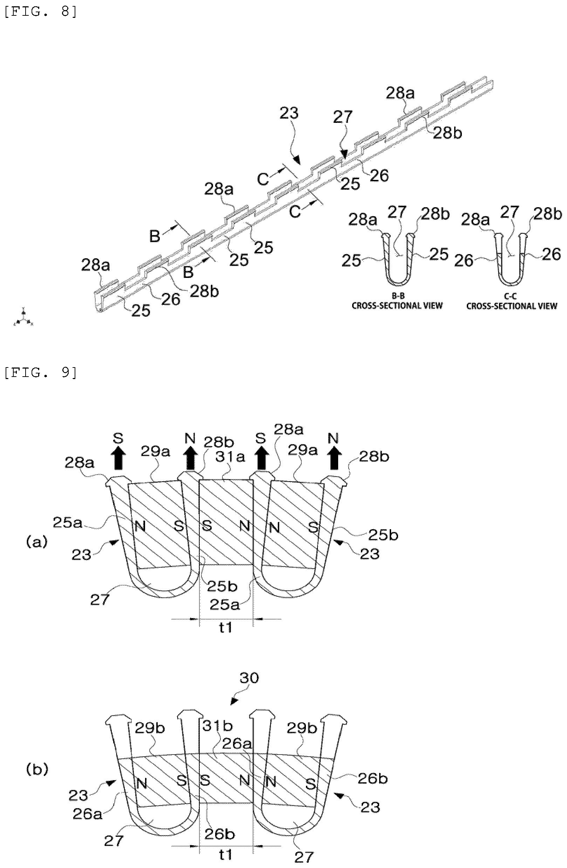

FIG. 8 are views illustrating the rotor magnetic iron piece according to the present invention. The rotor magnetic iron pieces 23 made of steel, which are installed in the plurality of first grooves 24 of the rotor frame 21, have a U-shaped cross section in a side view, and respectively include a first slot 27 formed in a recessed portion at a center thereof. The rotor magnetic iron piece 23 has a cross-sectional shape like a horseshoe magnet by rotor magnetic poles 25, which are protrusions positioned on both sides of the first slot 27 in a longitudinal direction, and the upper ends of the rotor magnetic poles 25 includes magnetic pole concentration parts (head parts) 28 provided by protruding jaws to both sides from wall surface in just like an arrowhead shape.

As such, the rotor magnetic iron piece 23 extending in the radial direction perpendicular to the rotor shaft has rotor magnetic poles 25 as protrusions and rotor non-magnetic sections 26 as recesses, which are alternately formed at upper ends on both sides that define the first slots 27 in the axial direction in a form of the rectangular concave-convex structure. The rotor non-magnetic sections 26 are formed by cutting and removing the material on the upper portions of the magnetic iron piece by press punching at a predetermined interval. In addition, a first permanent magnet set 29 having a plurality of first permanent magnets shown in FIG. 5 is buried in the first slots 27 at the center of the rotor magnetic iron piece 23, and a second permanent magnet set 31 having a plurality of second permanent magnets 31a and 31b is buried in second slots 30 which are space portions formed between adjacent rotor magnetic iron pieces 23 arranged in the first grooves 24 of the rotor frame 21d. Herein, if a length (width) of the recess is formed longer than the length (width) of the protrusion, it is more advantageous in making the magnetic action to occur in a range from the minimum to the maximum.

FIG. 9 is cross-sectional views illustrating the concept of burying permanent magnets in a rotor magnetic iron piece in detail, wherein (a) is a cross-sectional view illustrating a rotor magnetic pole tip portion, and (b) is a cross-sectional view illustrating a rotor non-magnetic portion.

The first permanent magnet set 29 includes first permanent magnets which have a shape close to a substantially rectangular parallelepiped shape buried in the first slots 27 of the rotor magnetic iron piece 23 (however, the shape, size, and height of the magnet are manufactured to depend on the shape of an inner surface of the first slot), and are arranged with the same pole facing the same direction (hereinafter, the first permanent magnet set referring to the entire first permanent magnet is denoted by a representative reference numeral 29, the first permanent magnets installed in the rotor magnetic poles as the protrusions are denoted by a reference numeral 29a, and the first permanent magnets installed in the rotor non-magnetic sections as the recesses are denoted by a reference numeral 29b). For example, the first permanent magnets 29a are installed in the rotor magnetic poles 25, which are the protrusions, aligned with heights of the head parts 28, and the first permanent magnets 29b are installed in the rotor non-magnetic sections 26, which are the recesses, aligned with heights of upper portions of wall surfaces 26a and 26b, such that they are buried close to the inner surface of the rotor magnetic iron piece 23. At this time, as shown in FIG. 9, when N poles of all the first permanent magnets 29a and 29b are arranged to face one side wall surfaces 25a and 26a of the magnetic iron piece 23, S poles are arranged to face the other side wall surfaces 25b and 26b opposite thereto.

Meanwhile, the second permanent magnet set 31 includes second permanent magnets which are buried in the second slots 30 formed between the adjacent rotor magnetic iron pieces 23 by continuously installing in the circumferential direction at a predetermined interval t1 from each other in the same shape, size, and arrangement method as those of the first permanent magnet set 29 (hereinafter, the second permanent magnet set referring to the entire second permanent magnet is denoted by a representative reference numeral 31, and high second permanent magnets vertically installed in the second slots in contact with the rotor magnetic poles as the protrusions are denoted by a reference numeral 31a, and low second permanent magnets installed horizontally in contact with the rotor non-magnetic sections as the recesses are denoted by a reference numeral 31b, wherein the size and shape thereof depend on those of the second slots). The first permanent magnet set 29 buried in the first slot 27 and the second permanent magnet set 31 buried in the second slot 30 are disposed so that the same polarities correspond to each other with the wall surface of the rotor magnetic iron piece 23 interposed therebetween. For example, if the polarity of the first permanent magnets 29a and 29b of the first permanent magnet set 29 in contact with the other side wall surfaces 25b and 26b of the magnetic iron piece is S pole, the polarity of the second permanent magnets 31a and 31b of the second permanent magnet set 31 in contact with the other side wall surfaces 25b and 26b is S pole (or otherwise N pole, if the polarity is N pole), so that the first and second permanent magnets are arranged with the same polarity in contact with each other. In addition, the first permanent magnet set 29 is installed vertically in the rotor magnetic poles 25, and the second permanent magnet set 31 is installed horizontally in the rotor non-magnetic sections 26, and then firmly and closely adhered to each other using a metal adhesive. Further, after the first permanent magnet set and the second permanent magnet set are buried and fixed in the first and second slots, respectively, it is necessary to suppress oxidation by preventing moisture and foreign matters from contacting, and to prevent a loss due to friction and heat generation. For this reason, it is preferable to coat these permanent magnets with a nonconductive metal or synthetic resin material having corrosion resistance and abrasion resistance.

When the permanent magnets are arranged and installed in the method as described above, a strong S-polar magnetic field is concentrated and projected through the upper end portions of the wall surfaces of the iron piece in contact with the same polarities of the N and N poles, particularly the head parts 28a having a function to increase concentration, and a strong N-polar magnetic field is concentrated and projected through the upper end portions of the wall surfaces of the iron piece in contact with the same polarity of the S and S poles, particularly the head parts 28b having a function to increase concentration. Thus, compared to the case where only a conventional single polarity is projected, a magnetic field which is almost twice as large is projected through each of the head parts 28a and 28b. As a result, both the S pole and the N pole may be used due to the arrangement structure of the rotor magnetic iron piece 23 and the first and second permanent magnet sets 29 and 31, such that availability of the magnets is high and a separate shielding structure is not required due to the structure. Therefore, a volume of the rotor 12 may be greatly reduced.

Accordingly, the rotor magnetic iron piece 23, the first slot 27, the second slot 30, and the first and second permanent magnet sets 29 and 31 form a rotor yoke. At this time, the circumferential ring-shaped assemblies of the plurality of rotor magnetic poles 25, which are protrusions, form a rotor magnetic pole tip 32, and the ring-shaped assemblies of the rotor non-magnetic sections 26, which are recesses, form a rotor non-magnetic portion 33. As a result, the rotor magnetic pole tip 32 and the rotor non-magnetic portion 33 alternately arranged in a ring shape have a difference in outer diameter in the axial direction. However, when employing an electromagnet rotor rather than the permanent magnet, the magnetic pole tip and the non-magnetic portion may be formed by winding field windings around a plurality of rotor magnetic poles 25 which are protrusions.

FIG. 11 is a view illustrating a state in which the assembly of the rotor 12, which has been assembled and manufactured according to the present invention, is installed on the rotor shaft 14 and accommodated in the electric generator case 11. The rotor shaft 14 is rotatably supported by structures of the bearings 16 and 16a, and the armature 13, which will be described below, is assembled on the outer circumference of the rotor 12 in the electric generator case 11 in a form of enclosing with a gap therebetween.

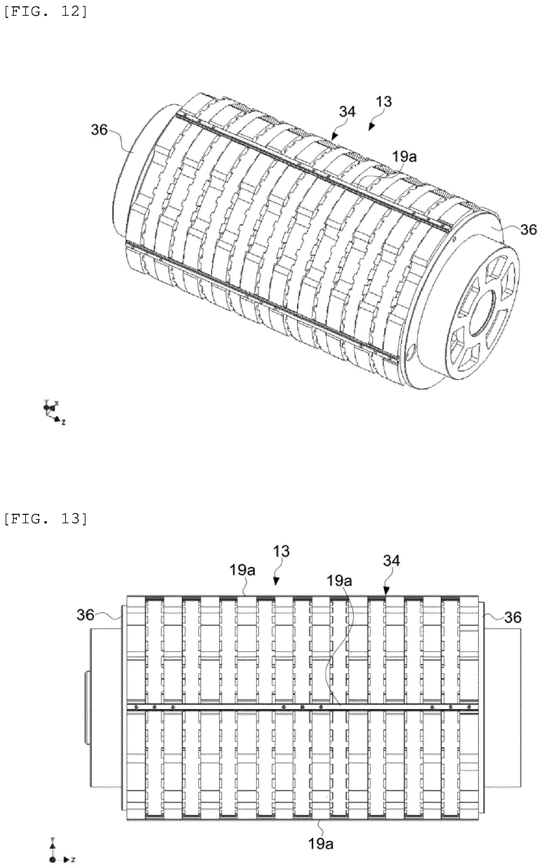

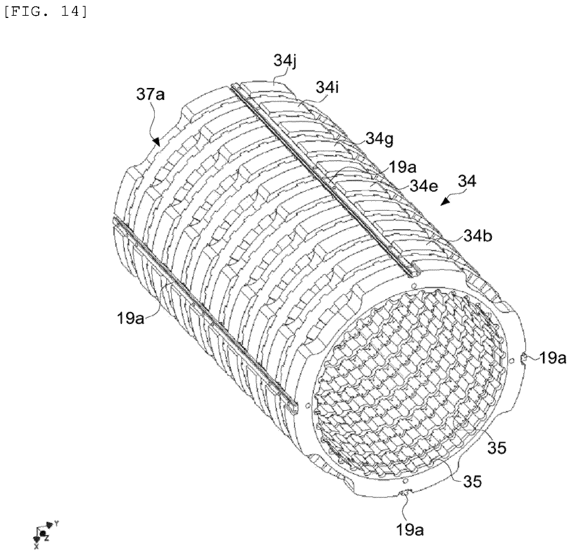

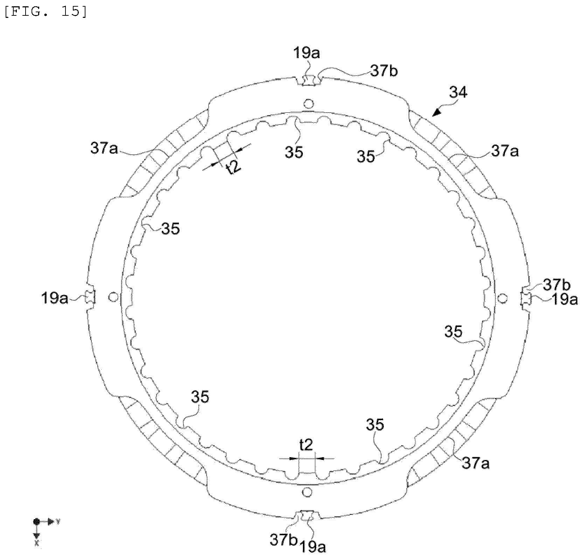

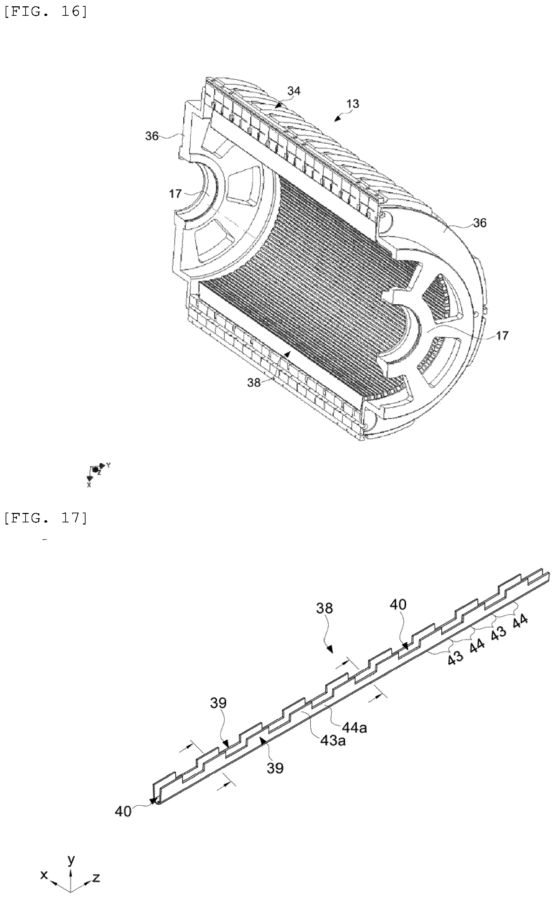

FIG. 12 is a perspective view illustrating an external shape of an armature according to the present invention, FIG. 13 is a front view illustrating the external shape of the armature according to the present invention, FIG. 14 is a perspective view illustrating an armature frame forming the armature according to the present invention, FIG. 15 is a side view illustrating the armature frame forming the armature according to the present invention, and FIG. 16 is a front perspective sectional view of the armature according to the present invention.

An armature frame 34 is made of a non-magnetic material in a hollow cylindrical shape, is accommodated on the inner circumference of the electric generator case 11, and is installed to surround the outer circumference of the rotor 12. The armature frame 34 may be formed as a single hollow cylindrical body. However, as shown in the drawings, it is preferable to form a single cylindrical body by fabricating and assembling a plurality of divided ring-shaped bodies 34a to 34j (representative reference numeral is denoted by 34) for the convenience of processing. As such, when the armature frame 34 is fabricated and assembled with divided ring-shaped bodies 34a to 34j, air circulation passages for discharging heat generated inside the armature 13 to the outside are formed on contact interfaces with each other, or it is easy to implement an internal structure having a complex curvature in the divided ring-shaped body, and thus there is an advantage in that it is easy to manufacture.

As shown in the cross-sectional view of FIG. 15, a plurality of rows, for example, four LM guide rails 19a are provided on the outer circumference of the armature frame 34 with a phase angle of 90° to each other. The LM guide rails 19a are configured to be coupled with the LM guide bearings 19b installed on the inner circumference of the electric generator case 11, thus to guide a linear reciprocating movement of the armature 13 in the axial direction by the LM guide bearings 19b. These plurality of LM guide rails 19a are fastened with a plurality of ring-shaped bodies 34a to 34g, respectively, by fixing means, for example, bolts, etc., thereby also functioning as a fastening means to form one cylinder body assembly (armature frame 34).

When the electric generator is operated, heat is generated due to friction with air according to high-speed rotation of the rotor, current generation of rotor field windings, and linkage of armature windings corresponding thereto, etc. Therefore, for cooling, exhaust passages 37a are formed in the inner circumference of the electric generator case on both sides in a direction parallel to the shaft, in which the LM guide rails 19a are provided, and communicate with an exhaust port provided on the side of the electric generator case, thereby performing a heat dissipation function. In addition, a clearance exists in a groove portion in which the LM guide rail 19a is mounted, and the clearance forms an exhaust passage 37b in the axial direction, thereby performing a similar heat dissipation function.

As shown in FIG. 15, a plurality of second grooves 35 having a substantially semicircular shape extending in the axial direction at a predetermined interval t2 are concavely formed in the inner circumference of the armature frame 34 over the entire circumference, and side frames 36 formed in a form of a disk having a plurality of support ribs are fastened to the both opened sides of the armature frame 34 cylinder by bolts. Therefore, it is configured to block the opening of the armature frame by the side frames 36, and sleeves 17 (bearing housing) for rotatably supporting the rotor shaft 14 passing therethrough are provided at the center of the support ribs of the side frames 36 (see FIG. 16). In addition, the armature 13 may be moved in the axial direction within a predetermined section range L1 along the rotor shaft 14 through the sleeves 17, and the sleeves 17 function to stably guide the rotor shaft, as well as serve to maintain a predetermined gap between the outer circumference of the rotor 12 and the inner circumference of the armature 13.

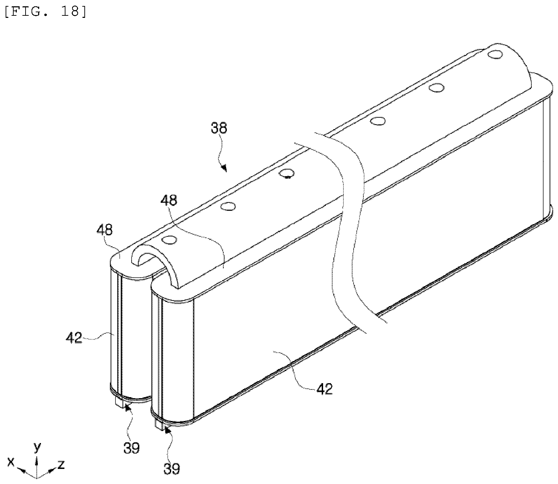

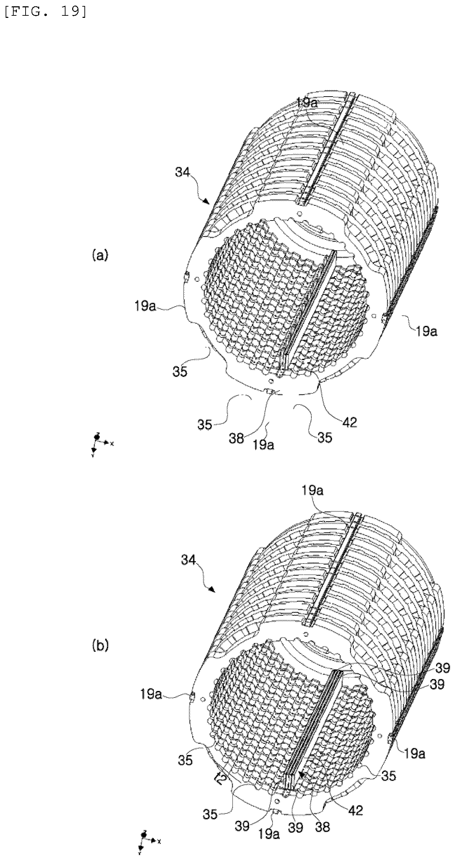

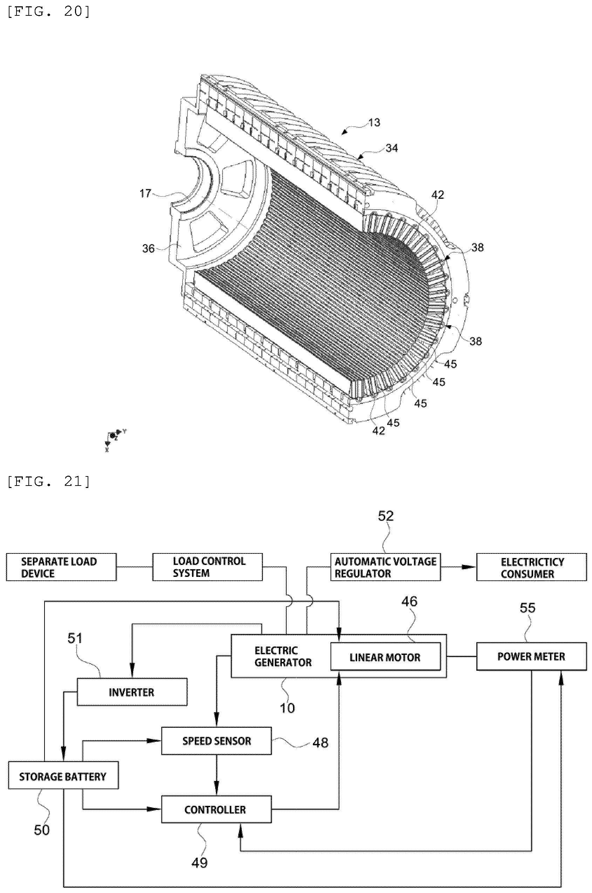

FIG. 17 is a perspective view of the armature magnetic iron piece of the present invention, FIG. 18 is a perspective view illustrating the armature magnetic iron piece completed by inserting a bobbin in the armature magnetic iron piece of the present invention and winding a coil around an outer circumference of the bobbin, FIG. 19(a) and (b) are perspective views illustrating a process of installing the armature magnetic iron piece on an inner surface of the armature frame of the present invention, and FIG. 20 is a perspective sectional view of the armature illustrating a state in which the armature magnetic iron piece is installed on the inner surface of the armature frame according to the present invention, which shows an internal structure after removing a side frame on one side.

FIGS. 17 to 20 are views illustrating the armature magnetic iron piece 38 installed in the armature frame of the present invention and the installation structure thereof. The armature magnetic iron piece 38 is mounted in such a manner that lower ends of the U-shaped body thereof are installed in the second grooves 35 formed in the inner circumference of the armature frame 34. The armature magnetic iron piece 38 has the same concave-convex shape and concave-convex width (length) as the rotor magnetic iron piece 23, and is manufactured using a silicon steel plate material so as to have a U-shaped cross section. The armature magnetic iron piece includes two armature magnetic iron cores 39 (a reference numeral 39 refers to the entire side wall surface) on both sides, which extend in a direction perpendicular to the rotor shaft to form side wall members. In addition, a first slot 40 is formed by a space between the armature magnetic iron cores 39 forming the side wall members on both sides, that is, by a U-shaped interior, and second slots 41 (interval t2) are formed between the respective armature magnetic iron pieces 38 arranged adjacent to each other at a predetermined interval t2.

In the armature magnetic iron piece 38 shown in FIGS. 17 and 18, armature windings 42, which are coils generating an AC voltage by a relative motion with the magnetic field, are wound around the armature magnetic iron cores 39 on both sides forming the side wall. At this time, in order to cover the coil formed as described above and protect the winding state, bobbins 48a having a spool shape are inserted on the armature magnetic iron cores 39, and after mounting as described above, the coils are wound around the outer circumferences of the bobbins 48a to form the armature windings 42. In addition, rectangular concave-convex structures are repeatedly formed at a predetermined interval in the longitudinal direction at the upper ends of the armature magnetic iron cores 39 (a reference numeral 39 refers to the entire side wall surface) on both sides. Herein, the protrusions form the armature magnetic poles 43a, and the recesses form the armature non-magnetic sections 44a. Accordingly, an armature yoke is formed by the first slot 40, the second slot 41, and the armature magnetic iron core 39 on which the coils are wound.

In the cross-sectional shape of the armature magnetic iron piece and the armature shown in FIGS. 16 to 20, in a state in which the armature magnetic iron pieces 38 having the armature windings 42 are mounted on the inner circumference of the armature frame 34, a columnar assembly of the armature magnetic poles 43a arranged in a ring shape forms the armature magnetic pole tip 43, and a columnar assembly of the armature non-magnetic sections 44b also arranged in a ring shape forms the armature non-magnetic portion 44. The armature magnetic pole tips 43 and the armature non-magnetic portions 44 formed as described above are alternately arranged on the inner circumference of the armature 13 in a ring shape with a predetermined width (the width of the protrusion and the recess).

As such, when n armature magnetic iron pieces are arranged on the inner circumference of the armature frame, armature windings are provided in n*2 magnetic iron cores placed on both sides of each of the n magnetic iron pieces. Therefore, n*2 multi-pole multi-phases are formed in the armature, which are connected as an overlapping winding, wave winding, open type winding, closed type winding, annular winding, and high phase winding, etc., thereby leading them to an output terminal.

In addition, in order to prevent the armature winding 42 from being cut or damaged due to a linear reciprocating movement of the armature 13, it is preferable to provide an extra winding in a form of a spring at an end portion of the armature winding.

As shown in FIGS. 19 and 20, the armature magnetic iron pieces 38 with the wound armature windings 42 are fixedly mounted in all the second grooves 35 by bolts, and it is preferable that separation spaces 45 formed (within t2) between the armature magnetic iron pieces 38 are filled with an insulation material to prevent short circuit between the adjacent armature windings 42 due to contact with each other.

As shown in FIG. 2, at least one, and in the embodiment of the present invention, two linear motors 46 are mounted up and down or right and left on a side of the cover 11b forming a part of the case 11 of the electric generator 10. As this linear motor 46, a stepping motor or a servo motor is used. In addition, the linear motor 46 is connected to the side frame 36 of the armature through a reduction mechanism for converting the rotational motion of the motor into a linear displacement motion, for example, a ball screw power transmission mechanism 47 having a shaft capable of being advanced or retracted. Therefore, the linear motor is configured to pull or push the armature 13 by a predetermined distance while the shaft of the ball screw power transmission mechanism 47 is being advanced or retracted according to a control of the rotational driving direction and the supply pulse amount of the linear motor 46, thereby allowing the armature to very precisely slide along the rotor shaft 14 in the axial direction within the range of the moving space 18 (L1). One of the greatest features of the present invention is that, as described below in detail, unlike the prior art, the non-rotating armature 13 is configured to move in the axial direction rather than the rotor 12 which is a high-speed rotating body, and by moving the ring-shaped assembly of the protrusion portion of the repeated concave-convex structure (see reference numeral 32 in FIG. 5 and reference numeral 43 in FIG. 20) in a range of one pitch section, that is, within a range as small as the movement length L1 shown in FIG. 2, the magnetic action may be controlled from no load to the maximum load. This is caused by the result of appropriately combining phenomena in which a magnetic field is generated intensively at the magnetic pole tip protruding from the outer circumference of the rotor, whereas the magnetic field is hardly generated at the sunk non-magnetic portion.

FIG. 21 is a block diagram illustrating a power generation system and a control system of the present invention. The power generation system of the present invention includes a speed sensor 48 provided on the cover 11b on one side of the electric generator case 11 to detect a rotation speed of the rotor shaft 14 in real time, and a controller 49 configured to compare and analyze information on the rotation speed of the rotor shaft detected by the speed sensor 48 in real time with the rated rotation speed that has already been set. The controller 49 may be installed on one side of the electric generator case 11 or may be installed at a separate portion.

In order to set a speed at which the rotor shaft 14 should rotate, set a frequency to be induced from the armature 13, and share information between the prime mover and the load control system, the controller 49 includes a control panel (not shown). A storage battery 50 is mounted in the electric generator case 11 or provided near the electric generator so that the speed sensor 48, the controller 49, and the linear motor 46 are supplied with direct current power and may be used as a load device that increases or decreases the magnitude of the Lorentz force. In addition, the power generation system includes an inverter 51 for converting AC electricity induced from the electric generator 10 into DC in order to store the electricity in the storage battery 50.

According to the power generation system including the electric generator of the present invention, the rotor shaft 14 is connected to the shaft 15a of the prime mover 15 through the clutch coupling 15b to obtain rotational power from the prime mover 15, AC electricity is induced at the armature windings 42 of the armature 13 by the rotation of the rotor 12 and the generated AC electricity is output through the output terminal provided in the electric generator case 11. The electricity output as described above is supplied to the electricity customer after the voltage is regulated at a constant level through an automatic voltage regulator 52. At this time, in order to be able to increase or decrease the Lorentz force when the power supplied from the prime mover 15 to the rotor shaft 14 is excessively large, or the load of the electric device using the electrical energy converted by the electric generator 10 is sharply reduced, the electric generator system may have a separate load device, and includes a load control system for controlling a system connection that receives information from the controller 49 in order to perform a co-operation with the electric generator 10 or the load of the electricity consumer.

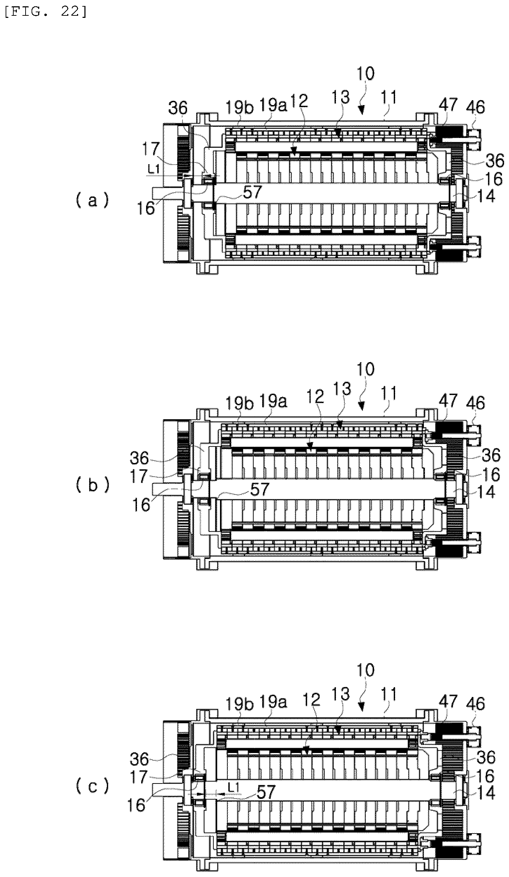

Hereinafter, an operation process of the electric generator 10 according to the present invention will be described in detail with reference to FIGS. 22(a), (b) and (c).

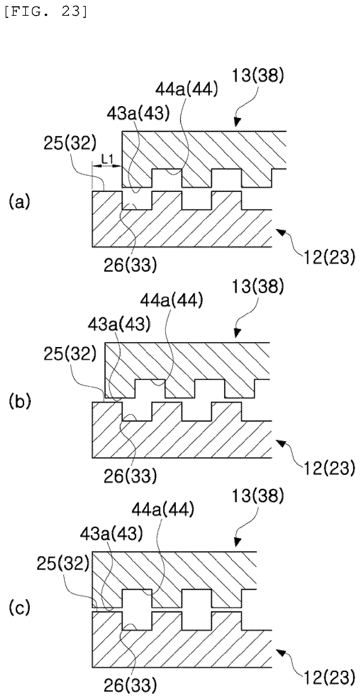

FIG. 22(a) is a view illustrating a position of the armature in the state of the minimum load (no load) at the beginning of the start of the electric generator, and FIG. 22(b) is a view illustrating the position of the armature in the normal operation state of the electric generator, and FIG. 22(c) is a view illustrating the position of the armature in the state of maximum power operation of the electric generator, and FIG. 23 is cross-sectional views illustrating the concept of a correspondence relationship between the rotor magnetic pole tip and the armature magnetic pole tip depending on operation states of the electric generator, which show the correspondence relationship between the rotor magnetic pole 25 and the armature magnetic pole 43a at the time of (a) is the lowest load (no load) operation, (b) is the center load operation, and (c) is the maximum load operation, respectively.

When power generation starts, first, in a state in which the shaft 15a of the prime mover and the rotor shaft 14 are connected to each other by a clutch coupling 15b provided in these shafts, the prime mover 15 (this prime mover may be an engine, a wind power generation unit, or other hydropower generation units, etc.) is driven, and as the prime mover 15 is driven, the rotor shaft 14, which has received the rotational power, rotates.

However, at the beginning of power generation when the prime mover 15 starts to drive, it takes time until the electric generator 10 is normally operated due to the stopping inertial force. In addition, excessive force is applied at the early stage of power generation, such that an excessive overload is applied to the prime mover and electric generator system. At the initial stage of power generation, the rotation speed of the rotor shaft 14 is low, such that the controller 49 controls the linear motor 46 in advance to move the armature 13 in the axial direction to a position shown in FIG. 19(a), that is, to the minimum load position (a kind of noload state, which is referred to as a 'first position' state, and at this time, the bearing 16 on the left side is locked to a step portion 57 of FIG. 22(a) on the rotor shaft) . In this 'first position' state, as shown in the conceptual diagram of FIG. 23(a), the armature magnetic pole tip 43 of the armature 13 (a ring-shaped assembly of the armature magnetic poles 43a) is positioned so as to correspond to the rotor non-magnetic portion 33 of the rotor 12 (a ring-shaped assembly of the rotor non-magnetic sections 16), and the armature non-magnetic portion 44 of the armature 13 (a ring-shaped assembly of the armature non-magnetic sections 44a) is positioned so as to correspond to the rotor magnetic pole tip 32 of the rotor 12 (a ring-shaped assembly of the rotor magnetic poles 25). In other words, the armature magnetic pole 43a and the rotor magnetic pole 25 are positioned so as to shift as much as possible from each other, based on the armature magnetic pole tip 43 and the rotor magnetic pole tip 32, that is, a pair of iron pieces.

As such, when the magnetic pole tip of the armature and the non-magnetic portion of the rotor (like the non-magnetic portion of the armature and the magnetic pole tip of the rotor) are positioned to face each other, the electromagnetic action interacting between the two tips is minimized. Therefore, when the prime mover 15 is driven, an operation is started in a driving state in which the load of the electric generator is minimal, that is, almost no load. Accordingly, an excessive overload is not applied to the prime mover 15 at the beginning of the start, such that the rotation speed is rapidly increased to reach the rated rotation speed. When the rotation speed of the prime mover 15 is gradually increased, the controller 49 controls so as to move the armature 13 in a direction in which an overlapping amount of the armature magnetic pole tip 43 and the rotor magnetic pole tip 32 is increased in proportion to the increased rotation speed (the armature is moved from the state of FIG. 22(a) to the state of FIG. 22(b)). Accordingly, the electric generator 10 is driven in a load state suitable for the rotation speed of the prime mover 15 to output electricity. As such, the load of the electric generator 10 is automatically controlled so that the load of the electric generator 10 is gradually increased from the minimum state in accordance with the level of the process in which the prime mover 15 is normally operated. Therefore, the prime mover and the electric generator smoothly enter the rated operation state through the warm-up process and reach the normal operation state without any shock or excessive load applied to the prime mover due to a sudden load action at the beginning of the start.

As such, when the rotation speed of the rotor shaft 14 is lower than a prescribed rotation speed, the armature 13 is moved to reduce the magnetic action range, thereby reducing the load applied to the driven prime mover 15. Accordingly, the operating state of prime mover 15 may quickly and smoothly enter the prescribed rotation speed. During the initial operation of the prime mover connected to the electric generator, in accordance with the command of the controller 49 based on the information detected by the speed sensor 48, it is controlled so that the armature 13 of the electric generator 10 is automatically moved to the first position where the magnetic action range is minimum (see FIG. 22(a)), and the prime mover 15 is operated in an almost no load state. Therefore, the prime mover 15 is easily started, quickly enters the normal operation state without shock due to sudden load application, and solves the inefficiency problem that the electric generator 10 produces poor electricity under the abnormal state of the prime mover 15. Further, even when the operation of the prime mover 15 is stopped, the armature 13 is controlled so as to move to the first position in which the magnetic action is minimized. Therefore, not only the prime mover has no impact due to the repulsive force, but also vibration is not generated in the rotor and armature of the electric generator 10, and it is possible to induce electricity with a prescribed frequency up to the end of the mechanical rotational energy provided.

As such, at the time of normal operation conditions in which the prime mover 15 and the electric generator 10 are normally operated under the design load, as shown in FIG. 22(b), the armature 13 is moved to the second position to perform power generation. However, if the driving force of the prime mover 15 is increased to be greater than the design load and reaches the maximum output operation state, the magnetic pole tip 32 of the rotor 12 and the magnetic pole tip 43 of the armature 13 correspond to each other in the maximum range, that is, the armature 13 is moved to the third position (maximum load position), and in this state, the electric generator is driven (see the position of the bearing 16 on the left side in FIG. 22 (c)). This state is the maximum output operation state of the electric generator. Herein, according to the setting of the driving condition state of the prime mover 15 and the electric generator 10, it is possible to control so that the operation is performed by setting the corresponding range between the magnetic pole tip 32 of the rotor 12 and the magnetic pole tip 43 of the armature 13 to a second position state (an appropriately set arbitrary position between the first position and the third position), which is partially overlapped and partially shifted as shown in FIG. 22(b) as an optimal driving condition, or to a third position state (the state of FIG. 22(c), which is the maximum load position) as the optimum operation condition.

When the rotor 12 rotates in the states shown in FIGS. 22(b) and 22(c), an induced electromotive force is generated in the armature windings 42 of the armature 13 surrounding the outside of the rotor 12. Accordingly, mechanical energy of the prime mover 15 is converted into electrical energy to generate power. At this time, if it is determined that the rotation speed of the rotor shaft 14 detected by the speed sensor 48 is decreased, the controller 49 drives the linear motor 46 and controls so as to move the armature 13 in a direction in which the magnetic action range is reduced, that is, in a direction in which the corresponding length of the armature magnetic pole tip 43 and the rotor magnetic pole tip 32 is reduced (that is, by appropriately controlling the movement amount of the armature from the third position to the second position or from the second position to the first position), such that the load applied to the operation of the prime mover is decreased.

Conversely, when the detected rotation speed is increased, the controller 49 drives the linear motor 46 and controls so as to move the armature 13 in a direction in which the magnetic action range is increased, that is, in a direction in which the corresponding length of the armature magnetic pole tip 43 and the rotor magnetic pole tip 32 is increased (that is, by controlling so as to move the armature from the first position or the second position to the third position), such that the load applied to the operation of the prime mover and the electric generator may be increased to output a greater amount of electricity.

According to the control system of the present invention, the rotor and the armature are constantly linked only when the rotor shaft rotates at a constant speed, such that electricity with a constant frequency may be induced from the electric generator. For example, even if a wind power in a wind power generator is severely fluctuated, the rotation speed of the rotor shaft is constantly maintained by controlling the load of the electric generator according thereto, such that it is possible to stably produce power with a constant frequency without difficulty.

A specific advantage of the present invention is that the rotor magnetic poles 25, which are the protrusions of the rotor 12, and the rotor non-magnetic sections 26, which are recesses, are alternately arranged in the axial direction, and in response thereto, the protrusions of the armature magnetic pole 43a and the recesses of the armature non-magnetic section 44a of the armature 13 are also alternately arranged, such that the range of movement amount of the armature 13 is set as small as the width of the protrusion (corresponding to the length of L1) to cover the severe change range of the motive power and wide frequency fluctuation. Accordingly, there is an advantage that the size of the electric generator does not have to be so large.

In addition, the permanent magnets are buried in the first slots, which are a space formed in the center of the U-shaped magnetic iron piece, and the second slots, which are a space formed between the magnetic iron pieces arranged adjacent to the magnetic iron pieces, such that there is no separate space or shield to block polarity. Therefore, since the alternation is not made rapidly, the magnetic action process in which the rotor magnetic pole and the armature magnetic pole meet and interact is smoothly performed, and the multi-pole configuration of the rotor is easily achieved.

In addition, n first slots are provided by arranging n rotor magnetic iron pieces in n first grooves provided in a direction parallel to the rotor shaft on the outer circumference of the rotor frame, and n second slots are formed between the rotor magnetic iron pieces arranged adjacent to each other. As a result, 2 × n rotor magnetic iron cores protrude, and 2 × n first and second slots are sunk to form a yoke, thereby forming 2 × n multi-pole rotors.

As another advantage of the present invention, in the U-shaped structure of the magnetic iron piece, since residual magnetism is mutually transferred to the magnetic iron core on the opposite side, hysteresis due to the residual magnetism that cannot be converted into electric charge does not occur.

Meanwhile, as the load using electricity induced from the electric generator 10 is increased or decreased, the magnitude of the Lorentz force is also increased or decreased in proportion to the load, and the force acts on the electric generator 10 to cause a slip frequency in the armature 13. Thereby, the frequency of the electricity induced from the armature has a difference from the alternating frequency of the rotor 12. Therefore, it is preferable that the speed sensor 48 for detecting the rotation speed of the rotor shaft 14 is used, and the detected results are utilized as information to check the operation state between the prime mover 15 and the electric generator 10. In addition to the speed sensor 48, when adding a power meter 55 for measuring the frequency and voltage of electrical energy converted by the electric generator in real time, for example, a sensor that detects a fluctuation in the frequency or voltage of electricity induced from the output terminal in real time, etc., detection information of the added sensor is used together with the detection information of speed sensor 48 to control the power generation system so that electricity with a prescribed frequency is induced from the output terminal against the fluctuation in the motive power or the fluctuation in the load amount, such that the system is highly effective. In particular, the ring-shaped gaps formed by the recesses between the armature and the rotor naturally act as a passage for heat dissipation, such that a high-speed and high-efficiency electric generator may be implemented. Further, by simply resetting the frequency on the control panel of the controller, it is possible to induce electricity with a frequency suitable for use by the electricity consumer.

In addition, by operating the storage battery 50 or a separate load device 53, not only the operation of the electric generator 10 but also the operation of the prime mover 15 and the operation of the separate load device may be stabilized. Furthermore, information is provided to the operation control system of the prime mover so as to increase or decrease the output of the motive power, and information is provided to the load control system 54 so as to execute prevention of load short circuit or load sharing. Therefore, organic safe operation and energy efficiency may be achieved in such a co-operation environment.

On the other hand, the Lorentz force proportional to the magnitude of the load using the electricity induced from the electric generator 10 acts on the armature 13 of the electric generator 10, thereby generating an armature slip frequency. Therefore, the controller 49 controls so as to move the armature 13 to the correct position based on the information detected by the power meter 55 (for example, a sensor for measuring an output voltage or frequency, and the speed sensor, etc.) at the output terminal in consideration of even armature slip frequency, such that the problem of the armature slip frequency may be solved, and electrical energy with a precise prescribed frequency may be induced.

Accordingly, the controller 49 detects the frequency and voltage information of the electricity output from the electric generator 10 by the power meter 55, in addition to the speed sensor 48 that detects the rotation speed of the rotor shaft 14, and of course, it may be possible to control the movement of the armature 13 based on each of these information or integrated information.

Meanwhile, although not specifically shown in the drawing, according to the configuration of another embodiment of the present invention, when the electric generator has a small size, it may be configured in such a way that, without being necessary to provide linear bearings and guide rails on the inner circumference of the electric generator case and the outer circumference of the armature frame, a center guide provided in the bearing housing is formed in a polygonal shape, and polygonal sleeves or linear bearings are installed in the center of the side frames installed at both ends of the armature, such that the armature can be supported by these sleeves or bearings so as to be linearly reciprocated.

While the present invention has been described with reference to the preferred embodiments, these embodiments are intended to illustrate the present invention, and are not intended to limit the same, as well as it would be understood by those skilled in the art that various changes and modifications may be made without departing from the scope of the present invention. Thereby, the scope of the present invention is not limited to the above-described embodiments, and will be defined by the appended claims as well as their equivalents.

### [Description of Reference Numerals]

- 10:: Electric generator
- 11:: Electric generator case
- 11a, 11b:: Left and right covers of case
- 12:: Rotor
- 13:: Armature
- 14:: Rotor shaft
- 15:: Prime mover
- 16, 16a:: Bearing
- 17, 17a:: Bearing housing
- 18:: Clearance (moving space L1)
- 19:: LM guide mechanism
- 19a:: LM guide rail
- 19b:: LM guide bearing
- 20:: Support member
- 21:: Rotor frame
- 22:: Protective cover
- 23:: Magnetic iron piece
- 24:: First groove
- 25:: Rotor magnetic pole
- 26:: Rotor non-magnetic section
- 27:: First slot
- 28:: Magnetic pole concentration part (head part)
- 29:: First permanent magnet set
- 30:: Second slot
- 31:: Second permanent magnet set
- 32:: Rotor magnetic pole tip
- 33:: Rotor non-magnetic portion
- 34:: Armature frame
- 35:: Second groove
- 36:: Side frame
- 37a:: Exhaust passage
- 37b:: Exhaust passage
- 38:: Armature magnetic iron piece
- 39:: Armature magnetic iron core (side wall)
- 40:: First slot
- 41:: Second slot
- 42:: Armature winding
- 43:: Armature magnetic pole tip
- 44:: Armature non-magnetic portion
- 43a:: Armature magnetic pole
- 44a:: Armature non-magnetic section
- 45:: Separation space
- 46:: Linear motor
- 47:: Power transmission mechanism
- 48:: Speed sensor
- 49:: Controller
- 50:: Storage battery
- 51:: Inverter
- 52:: Automatic voltage regulator
- 53:: Separate load device
- 54:: Load control system
- 55:: Electrical measurement sensor
- 56:: Concave and convex coupling part
- 57:: Step portion
- t1, t2:: Gap (space)

## Claims

1. A magnetic iron piece used in a rotor of an electric generator, the magnetic iron piece for a rotor comprising:
a body having a U-shaped cross section and extending in a longitudinal direction,
wherein both side walls of the body facing each other have protrusions and recesses of a concave-convex structure formed at upper ends thereof in a square shape, and
the protrusions of the concave-convex structure form rotor magnetic poles, and the recesses form rotor non-magnetic sections, such that the rotor magnetic poles and the rotor non-magnetic sections are alternately and repeatedly provided.

2. The magnetic iron piece for a rotor according to claim 1,
wherein first permanent magnets of a first permanent magnet set are inserted into first slots concavely formed inside the U-shaped of the magnetic iron piece,
the rotor magnetic poles and the rotor non-magnetic sections accommodate the first permanent magnets installed therein with a size corresponding to heights thereof, and
the first permanent magnets are arranged so that their N and S poles are expressed by contacting each of inner wall surfaces on both sides of the magnetic iron piece, and all polarities of the N and S poles face the same direction.

3. The magnetic iron piece for a rotor according to claim 1, wherein the upper end of the rotor magnetic pole, which is the protrusion, includes magnetic pole concentration parts (head parts) having jaws protruding beyond a wall thickness of the magnetic iron piece, and the first permanent magnets disposed in the rotor magnetic pole are installed to be caught and supported by the jaws of the magnetic pole concentration parts.

4. A rotor mounted on a rotor shaft of an electric generator, the rotor for an electric generator comprising:
a rotor frame fixed to the rotor shaft so as to rotate together with the rotor shaft;
a plurality of first grooves formed at a predetermined interval over an entire circumference of the rotor frame and extending in an axial direction; and
a rotor magnetic iron piece according to claim 2 in which a portion of an each lower end of a U-shaped body is inserted and mounted in the first grooves,
wherein second slots are formed in the gap between the rotor magnetic iron pieces, and second permanent magnets of a second permanent magnet set are inserted in the second slots in the same size and manner as the first permanent magnet set, and the second permanent magnets are arranged so as to have the same polarity as that of the first permanent magnets with a wall surface of the rotor magnetic iron piece interposed therebetween.

5. The rotor for an electric generator according to claim 4, wherein the rotor frame is formed of an assembly of a plurality of divided unit bodies, and protective covers are fastened to both sides of the assembly by bolts.

6. The rotor for an electric generator according to claim 5, wherein the plurality of divided unit bodies are coupled to each contact surface thereof through concave and convex coupling parts having a circular or polygonal shape corresponding to each other in a male and female coupling manner.

7. A magnetic iron piece used for an armature of an electric generator, the magnetic iron piece for an armature comprising:
wherein both side walls of the body facing each other have protrusions and recesses of a concave-convex structure formed at upper ends thereof in a square shape, and
the protrusions of the concave-convex structure form armature magnetic poles, and the recesses form armature non-magnetic sections, such that the armature magnetic poles and the armature non-magnetic sections are alternately and repeatedly provided, and
after each bobbin is fitted to both side walls forming the U-shaped cross section, coils are wound around the bobbin to form armature windings.

8. An armature installed so as to surround an outer circumference of a rotor mounted on a rotor shaft of an electric generator with a gap therebetween, the armature for an electric generator comprising:
an armature frame manufactured in a non-magnetic hollow cylindrical shape and installed so as to surround the outer circumference of the rotor;
a plurality of second grooves formed in an inner circumference of the armature frame at a predetermined interval over an entire circumference thereof and extending in the axial direction; and
an armature magnetic iron piece according to claim 7 in which a portion of an each lower end of a U-shaped body is inserted and mounted in the second grooves.

9. The armature for an electric generator according to claim 8,
wherein the armature frame is formed of a single cylindrical body or an assembly of a plurality of divided ring-shaped bodies,
LM guide rails are installed in a plurality of portions on an outer circumference of the armature frame to have a predetermined phase angle in an axial direction,
the LM guide rails are configured to guide a linear movement in the axial direction along the guide of LM guide bearings provided on an inner surface of an electric generator case, and prevent rotation of the armature frame in a circumferential direction, and
the LM guide rails are used as a fastening means of the plurality of divided ring-shaped bodies.

10. The armature for an electric generator according to claim 8, wherein a space between the armature windings of the armature magnetic iron piece is insulated.

11. The armature for an electric generator according to claim 10, wherein side frame members are fastened to both opened sides of the cylindrical armature frame by bolts, and
sleeves for rotatably supporting the rotor shaft are provided at centers of the side frame members, and the sleeves are mounted to slide along the rotor shaft within a predetermined distance range.

12. An electric generator comprising:
a rotor shaft connected to the rotor shaft of a power source by a clutch coupling;
a rotor for an electric generator according to any one of claims 4 to 6, which is mounted on the rotor shaft to be rotatable together therewith; and
an armature for an electric generator according to any one of claims 8 to 10 which is installed concentrically so as to surround an outer circumference of the rotor of an electric generator with a predetermined gap therebetween, is installed to allow movement within a predetermined interval range in an axial direction of the rotor, and has protrusions and recesses of a concave-convex structure having the same length as the protrusions and recesses of a concave-convex structure of the rotor corresponding thereto;
an electric generator case which surrounds an outer circumference of the armature for an electric generator to protect the same;
a linear motor configured to move the rotor through a mechanism capable of being advanced or retracted in the axial direction;
a speed sensor configured to detect a rotation speed of the rotor shaft or a power meter configured to measure output voltage and frequency of the electric generator; and
a controller configured to control and drive the linear motor based on information detected from the speed sensor or the power meter,
wherein the controller controls the linear motor so that the armature is moved to a first position in a direction in which a corresponding length between an armature magnetic pole tip and a rotor magnetic pole tip is decreased at the beginning of driving the electric generator or when a driving speed of a prime mover is decreased, and conversely, controls the linear motor so that the armature is moved to a third position in a direction in which the corresponding length between the armature magnetic pole tip and the rotor magnetic pole tip is increased when the driving speed of the prime mover is increased.

13. The electric generator according to claim 12, wherein side frame members are fastened to both opened sides of the cylindrical armature frame of the armature by bolts, and
sleeves (bearing housing) for rotatably supporting the rotor shaft are provided at centers of the side frame members, and the sleeves are mounted to slide along the rotor shaft within a predetermined distance range.

14. The electric generator according to claim 13, wherein a movement distance of the armature in the axial direction corresponds to a width of a protrusion or a width of a recess of the armature magnetic iron piece.

15. The electric generator according to claim 14, wherein the controller controls the movement distance of the armature in the axial direction based on rotation speed information detected by the speed sensor or output voltage and frequency information of the electric generator detected by the power meter.

16. The electric generator according to claim 12, wherein the upper end of the rotor magnetic pole, which is the protrusion of the rotor magnetic iron piece, includes magnetic pole concentration parts (head parts) having jaws protruding beyond a wall thickness of the magnetic iron piece, and first permanent magnets of a first permanent magnet set and second permanent magnets of a second permanent magnet set, which are respectively disposed in the first slots and the second slots, are installed to be caught and supported by the jaws of the magnetic pole concentration parts with being in contact with the rotor magnetic pole.

17. The electric generator according to according to claim 12, wherein, in the armature and the rotor, the recess forming the non-magnetic section has a length formed longer than the length of the protrusion forming the magnetic pole.

18. The electric generator according to claim 12, wherein the power source driving the electric generator is any one of wind energy, hydraulic energy, thermal energy, engine driving power, and steam energy.

19. The electric generator according to claim 17, wherein the first permanent magnets of the first permanent magnet set buried in the first slots of the rotor magnetic iron piece are installed vertically in a protrusion section and horizontally in a recess section, are formed to match the protrusion and the recess of the square concave-convex structure formed on the upper portion of the magnetic iron core forming wall members on both sides, and are fixed in close contact by a metal adhesive so that the same poles face the magnetic iron core.

20. The electric generator according to claim 12, wherein a center guide provided in the bearing housing of an end shield is formed in a polygonal shape, and polygonal sleeves or linear bearings are installed at centers of the side frames installed at both ends of the armature, thereby supporting the armature so as to be linearly reciprocated.

21. The electric generator according to claim 12, wherein the groove of the armature frame on which the LM guide rails are mounted is configured to form an exhaust passage in the axial direction.

22. The electric generator according to claim 12, wherein exhaust passages extending in the axial direction are formed on an outer surface of the armature frame between the plurality of LM guide rails.
